# EUROPEAN PATENT SPECIFICATION

(11) **EP 2 003 533 B1**
(45) Date of publication and mention of the grant of the patent: **10.02.2010**
(21) Application number: 08165796.7
(22) Date of filing: 10.08.2006
(51) Int. Cl.: G06F 1/32

(54) **Apparatus for power management in an electronic device**
Vorrichtung zur Leistungssteuerung in einer elektronischen Vorrichtung
Appareil pour la gestion de la puissance dans un dispositif électronique

(43) Date of publication of application: 17.12.2008
(62) Divisional of application: 06118750.6
(73) Proprietor: Research In Motion Limited, Waterloo, Ontario N2L 3W8 (CA)
(72) Inventor: Guthrie, Martin, Moffat, Ontario L0P 1J0 (CA); Book, Christopher, Waterloo Ontario N2T 2S7 (CA); Winger, Lyall, Waterloo Ontario N2V 2A4 (CA)
(74) Representative: MERH-IP Matias Erny Reichl Hoffmann

(56) References cited:
- US-A- 4 290 677
- US-A- 5 845 142
- US-A- 5 963 255

## Description

The present application relates generally to electronic devices and more particularly relates to a method and electronic device for power management in an electronic device, such as a multi-function portable electronic device that includes a camera flash or the like.

Electronic devices continue to get smaller and incorporate more functions. It is well known to incorporate the functions of a traditional personal digital assistant ("PDA") with wireless email capability into a single device, the Blackberry^{™} from Research in Motion of Waterloo, Canada being an example of such a device. It is also known to incorporate wireless voice functionality, music and video players into such devices. Increasingly, cameras are being incorporated into such devices.

With integration, so too comes increased device complexity. Power management in the device needs to reflect that complexity. For example, due to the portable nature of these devices, a robust rechargeable battery is desirable, if not a necessity, to satisfy user demands. However, even with a robust rechargeable battery, sophisticated power management techniques are needed to optimize battery use.

However, power management in such devices still needs much improvement. One particular vexing problem is the camera flash. When the battery is low, or cold, the battery ESR may be too high to support a camera flash. The camera flash is a high drain on the battery for a long period of time. It is not uncommon for a camera flash to draw up to about one ampere (Amp) of power from the battery for up to about eighty milliseconds (ms). This draw can cause battery "droop". In such cases the battery droop may be such to trip battery supervisory circuits, causing the handset to reset or go into sleep mode. This can be a frustrating experience for the user.

One approach to try and address this problem is to map known levels of battery capacity and voltage into tables that are associated with events that should occur at those battery capacity levels. This can be an effective approach for components that draw relatively small or steady amounts of power. However, for a flash or other high-intensity component, a large margin of battery reserve is needed as the momentary conditions of a battery that can withstand such a high-intensity burst can vary. Accordingly this approach is not a satisfactory option for at least some situations.

US-A-5963255 describes a system and method for managing utilization of a battery, particularly in the context of a digital camera. The camera is configured to monitor the voltage level of the camera, and, if the voltage falls below a predetermined threshold, then the power manager configures the camera into a lower power consumption state. The use of multiple power consumption states does not address the problem that can be caused by a flash or other high-intensity component whereby a large margin of battery reserve may be needed, and difficult to determine, as the momentary conditions of the battery vary.

US-A- 5845142 describes a portable terminal that has a judging means for forecasting the power that is necessary for conducting a communication, and a means for measuring current residual battery capacity. The communication will be allowed or suppressed based on the forecast of power and the amount of residual battery capacity. Again, this disclosure does not address the problem that can be caused by a flash or other high-intensity component whereby a large margin of battery reserve may be needed, and difficult to determine, as the momentary conditions of the battery vary.

US-A-4290677 describes an apparatus for checking the operational status of an electronic strobe unit's battery under load conditions. The intent in this disclosure is to ultimately provide an indicator that provides a visual indication of the charge condition of the battery. Again, it does not address the problem that can be caused by a flash or other high-intensity component whereby a large margin of battery reserve may be needed, and difficult to determine, as the momentary conditions of the battery vary.

### GENERAL

An aspect of the invention provides an electronic device comprising: a power supply; a supervisor circuit connected to said power supply for disabling all or a portion of functions of said electronic device if a first level of power from said power supply falls below a predefined threshold, a radio, said supervisor circuit configured to disable said radio when said power supply falls below 3.4 Volts for at least fire milliseconds; a processor connected to said power supply and said supervisor circuit; said processor configured to receive a request via an input device for a function to be performed by said electronic device; an output device connected to said power supply, said processor, and said supervisor circuit, said output device configured to perform a function that draws power from said power supply; said processor being configured to perform the steps of: performing a pre-function test; said pre-function test based on said function and selected to consume less power than said function and also selected to not cause the first level of power to fall below said predefined threshold; determining a second level of power to said device as a consequence of performing said pre-function test; and, if said second level of power meets at least one predefined criterion, preventing said device from performing said function or otherwise permitting said device to perform said function.

After preventing the device from performing the function, the device may be permitted to perform an alternative function that consumes less power than the function. If the function is a camera flash used at full power then the alternative function can be the camera flash used at less than full power. The alternative function can be chosen to consume a third level of power that is greater than the predetermined threshold and differs from the predetermined threshold by a value that approaches zero. In other words the third level of power is chosen to maximize the amount of power available to the alternative function, but without crossing the predetermined threshold.

The output device can be a camera flash. The flash can be activated according to the function for a period of about eighty milliseconds and draws power of about one ampere. The flash can be activated according to the pre-function test for a period of about two milliseconds so as to draw power of about one ampere.

In conjunction with preventing the electronic device from performing the function, the processor can be operable to generate an output signal indicating that there is insufficient power to perform the function.

The power supply can be a rechargeable battery housed within the electronic device.

The first level and the second level of power can be measured using one or more of battery voltage, battery amperage, battery equivalent series resistance, and battery temperature.

The processor can be configured to measure the battery level after performing the pre-function test.

The processor can be configured to measure the battery level once before and once after performing the pre-function test.

The processor can be configured to measure the battery level throughout the performance of the pre-function test.

The processor can be further configured to, after preventing the electronic device from performing the function, permit the output device to perform an alternative function that consumes less power than the function.

Where the function is a camera flash used at full power, the alternative function can be the camera flash used at less than full power.

The alternative function can be chosen to consume a third level of power that is greater than the predetermined threshold and differs from the predetermined threshold by a value that approaches zero.

The supervisor circuit may be configured to enter said electronic device into a sleep mode when said power supply falls below 3.1 Volts for at least three milliseconds.

In accordance with one aspect of the present invention there is provided an electronic device in accordance with claim 1.

### BRIEF DESCRIPTION OF THE DRAWINGS

Embodiments, which are purely exemplary, will now be discussed with reference to the attached Figures in which:
Figure 1 is a front view of an electronic device in accordance with an embodiment;
Figure 2 is a rear view of the device of Figure 1;
Figure 3 is a block diagram of certain internal components of the device of Figure 1;
Figure 4 shows a flow-chart depicting a method of power management in accordance with an embodiment;
Figure 5 shows a flow-chart depicting a method of power management in accordance with another embodiment;
Figure 6 shows a flow-chart depicting a method of managing power in a camera when a battery level cannot sustain a full flash;
Figure 7 shows exemplary voltage profiles of a battery when a flash is used at full power; and,
Figure 8 shows exemplary voltage profiles of pre-flash tests overlaid on the voltage profiles of Figure 7.

### DESCRIPTION OF PREFERRED EMBODIMENTS

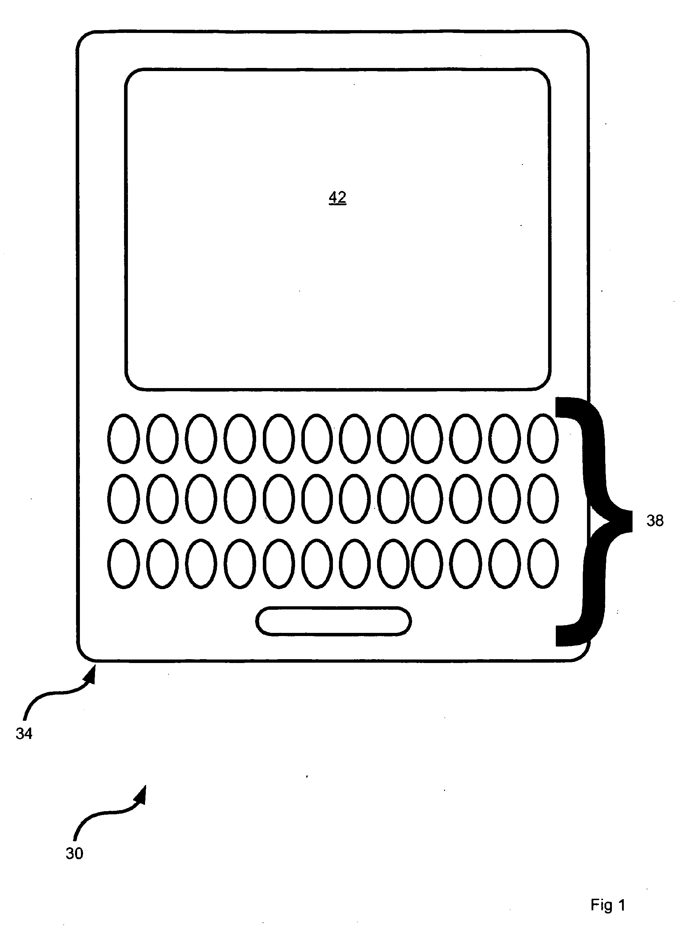

Referring now to Figure 1, a front view of electronic device in accordance with an embodiment is indicated generally at 30. Device 30 includes a housing 34 that frames an input device in the form of a keyboard 38 and an output device in the form of a display 42. In a present embodiment, device 30 includes at least the functionality of a wireless email paging device and a user of device 30 can interact with keyboard 38 and display 42 to send and receive email messages. It is to be understood that device 30 is simplified for purposes of explanation, and that in other embodiments device 30 can include, and typically would include additional functionality and include input and output devices accordingly. Such other functionality can include voice telephony, music player, audio recording and video player. Thus, other input devices can include microphones, and other output devices can include speakers. Device 30 can also be equipped with Bluetooth^{™} (or equivalent technology) which acts as a wireless conduit for such input and output device. In general, it should be understood that device 30 can include any combination of functions.

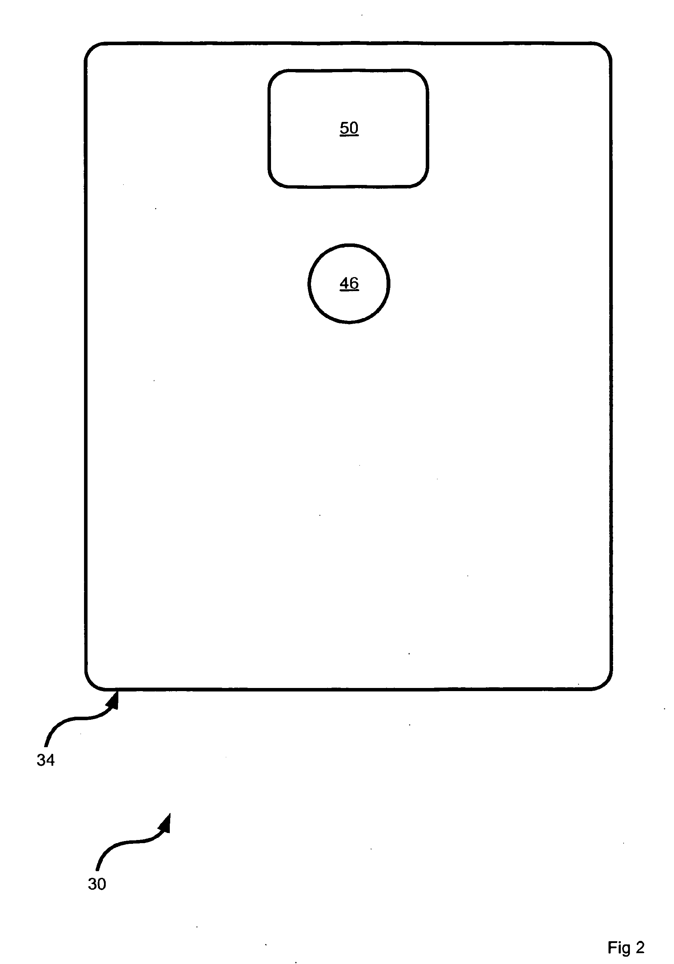

In a present embodiment, device 30 also includes a camera. Referring now to Figure 2, a rear view of device 30 is shown. Device 30 thus also includes an additional input device in the form of a camera lens 46 and an additional output device in the form of a flash 50. Those skilled in the art will recognize that lens 46 is also associated with an array of light-sensitive transducers such as an array of charge coupled devices (CCD) which actually create an electronic signal of the image captured via lens 46.

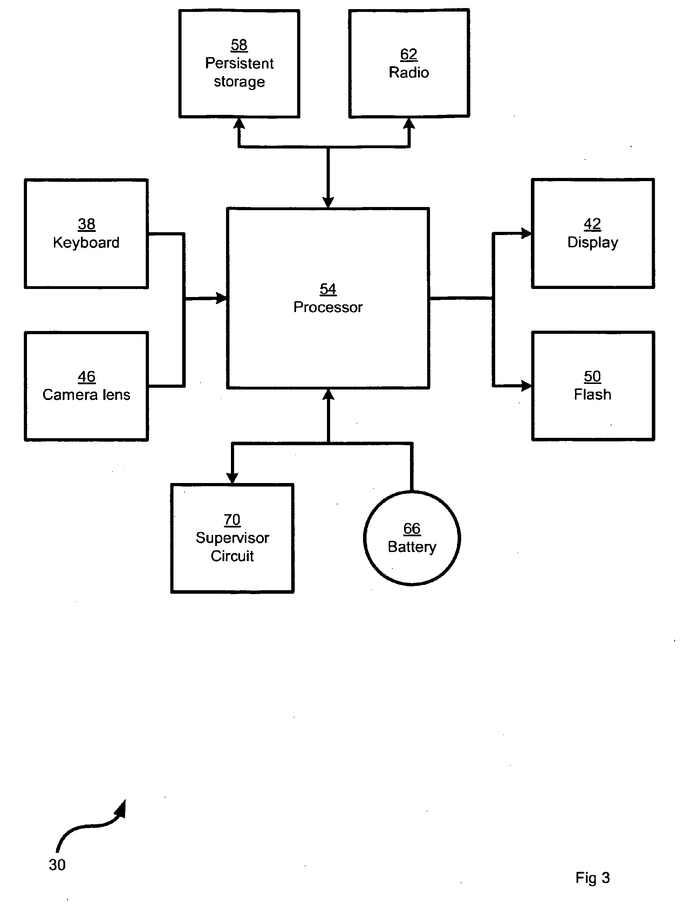

Referring now to Figure 3, a block diagram representing the internal components of device 30 is shown. Device 30 thus includes a processor 54 which interconnects the input devices of device 30 (i.e. keyboard 38 and camera lens 46) and the output devices of device 30 (i.e. display 42 and flash 50). Processor 54 is also connected to a persistent storage device 58. (Persistent storage device 58 can be implemented using flash memory or the like, and/or can include other programmable read only memory ("PROM") technology and/or can include read only memory ("ROM") technology.) Device 30 also includes a wireless radio 62 disposed within housing 34 that connects wirelessly to one of a network of base stations to provide the wireless email functionality of device 30.

Device 30 also includes a battery 66 which is typically rechargeable and provides power to the components of device 30. In a present, purely exemplary embodiment, battery 66 is a lithium battery having an operating voltage of between about 3.0 Volts minimum to about 4.2 Volts maximum. In Figure 3, for simplicity battery 66 is only shown connected to processor 54, but it will be understood that battery 66 is connected to any component (e.g. the CCD associated lens 46, radio 62, display 42 and flash 50) within device 30 that needs power to operate.

Those skilled in the art will now recognize that flash 50 is a high-intensity component that can cause significant battery drain. As an example, for device 30 it will be assumed that flash 50 draws about one ampere of power for about eighty milliseconds during a single picture-taking flash.

Device 30 also includes a supervisor circuit 70 that is connected to battery 66 and processor 54. Supervisor circuit 70 is operable to monitor the life of battery 66 and depending on the life of battery 66, supervisor circuit 70 can disable various components that draw power and/or cause device 30 to enter sleep mode and/or turn-off device 30 altogether. Supervisor circuit 70 is shown as a separate hardware component within device 30, but it should be understood that can simply be implemented as a software process that executes on processor 54. (As a still further alternative to the present embodiment, supervisor circuit 70 can be implemented as part of a larger analog power-management integrated circuit, such as the TPS65800 power management integrated circuit ("PMIC") from Texas Instruments Incorporated, 12500 TI Boulevard, Dallas, TX 75243-4136.) For example, if supervisor circuit 70 determined that the life of battery 66 was below a certain predefined threshold, then supervisor circuit 70 may disable radio 62 and thereby permit device 30 to continue its other functions even though the send-and-receive capability of the wireless email function is disabled. As another example, if supervisor circuit 70 determined that the life of battery 66 was nearly drained, then supervisor circuit 70 can cause device 30 to turn off altogether, but still ensure that enough power remains in battery 66 to ensure that data is not lost in processor 54 and/or persistent storage 58.

Supervisor circuit 70 can include a variety of parameters associated with the predefined threshold. For purposes of explaining the present embodiment, Table I gives an example of parameters that can be associated with battery 66, where battery 66 is a lithium battery with the characteristics as described above.

**Table I**

| **Parameters of Supervisor Circuit 70** | | | |
|---|---|---|---|
| **Event Number** | **Voltage Threshold (Volts)** | **Duration (milliseconds)** | **Event** |
| 1 | 3.4 Volts | five ms | Disable radio 62 |
| 2 | 3.1 Volts | three ms | Enter sleep mode |

In Table I, two exemplary parameters are shown. The first column, event number, is simply a label for a particular set of parameters. The second column, voltage threshold, defines a certain voltage level below which an event associated with the event number may be triggered. The third column, duration, defines a time period whereby if the voltage of battery 66 in the second column falls below the voltage level in the second column for the duration in the third column, then the event in the fourth column will be triggered.

For example, in event number one, if the voltage of battery 66 drops below 3.4 Volts for five milliseconds, then supervisor circuit 70 will disable radio 62. Likewise, in event number two, if the voltage of battery 66 drops below 3.1 volts for three milliseconds, then supervisor circuit 70 will cause device 30 to enter sleep mode.

It is to be understood that the parameters in Table I are exemplary. Other parameters may be included, such as a measurement for equivalent series resistance ("ESR"). Complex formulas may also be associated with each parameter before a particular event is triggered.

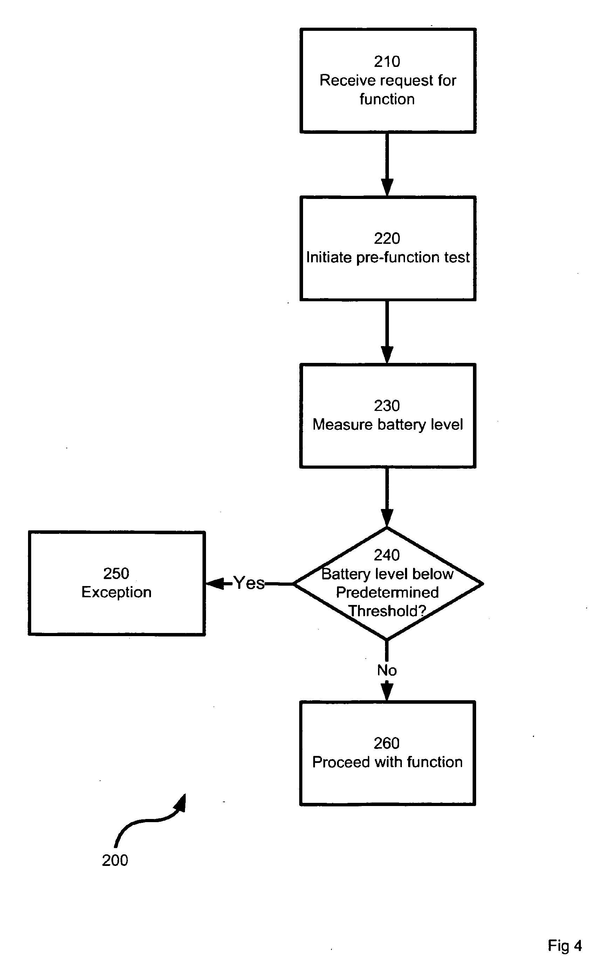

Referring now to Figure 4 a method of power management in an electronic device is represented in a flow-chart and indicated generally at 200. To assist in understanding method 200, method 200 will be explained in terms of its performance using device 30 in the context of flash 50. However, it is to be understood that this explanation is not to be construed in a limiting sense and that method 200 can be performed on other devices other than device 30, and/or that method 200 can be varied.

Beginning at step 210, a request for a function is received. On device 30, this step can be effected when processor 54 receives an input via keyboard 38 that the user desires to use the flash function in order take a flash picture and capture an image through lens 46.

Next, at step 220 a pre-function test is initiated. In a present example, the pre-function test is a pre-flash test. The scope of the pre-flash test is chosen based on the parameters of supervisor circuit 70 and flash 50, to be sure that the pre-flash test does not actually exceed the event thresholds of the supervisor circuit 70 and trigger one of the events in Table I.

Since, according to Table I, if the voltage of battery 66 drops below 3.1 volts for more than three milliseconds device 30 will enter sleep mode, then the duration of the pre-flash test should be chosen to be much shorter than three milliseconds so that the pre-flash test will not cause supervisor circuit 70 to cause device 30 to enter sleep mode. Thus, as an example, it can then be desired to establish a pre-flash test that fires flash 50 so that flash 50 will draw the full one ampere of current from battery 66, but at the same time only fire flash for a period of two milliseconds (or other period well less than three milliseconds), so that the pre-flash test does not exceed the thresholds of supervisor circuit 70.

According to the above example, at step 220 flash 50 will be fired by processor 54 for a period of two milliseconds such that one ampere of power is drawn by flash 50 from battery 66 for a two millisecond period.

Next, method 200 will advance from step 220 to step 230 at which point the level of battery 66 will be measured. Again, the variables used in measuring battery 66 are not particularly limited, and can include any known measurements used for measuring battery 66, for example, voltage level and ESR. At step 240, a determination is made as to whether the level measured at step 230 is below a predetermined threshold.

If, at step 240, it is determined that the battery level is below the predefined threshold, then method 200 advances to step 250 where an exception occurs. The exception can simply be a message presented on display 42 to the effect that the battery level is too low in order to use flash 50, and flash 50 can then be disabled so that device 30 continues to otherwise function normally except that flash 50 is not available for use.

If, however, at step 240 it is determined that the battery level is not below the predefined threshold, then method 200 advances to step 260 at which point the selected function in device 30 proceeds to operate normally, which in this case is flash 50. In other words, at step 260, in the present example flash 50 would operate normally and a flash picture would be taken using the camera features of device 30.

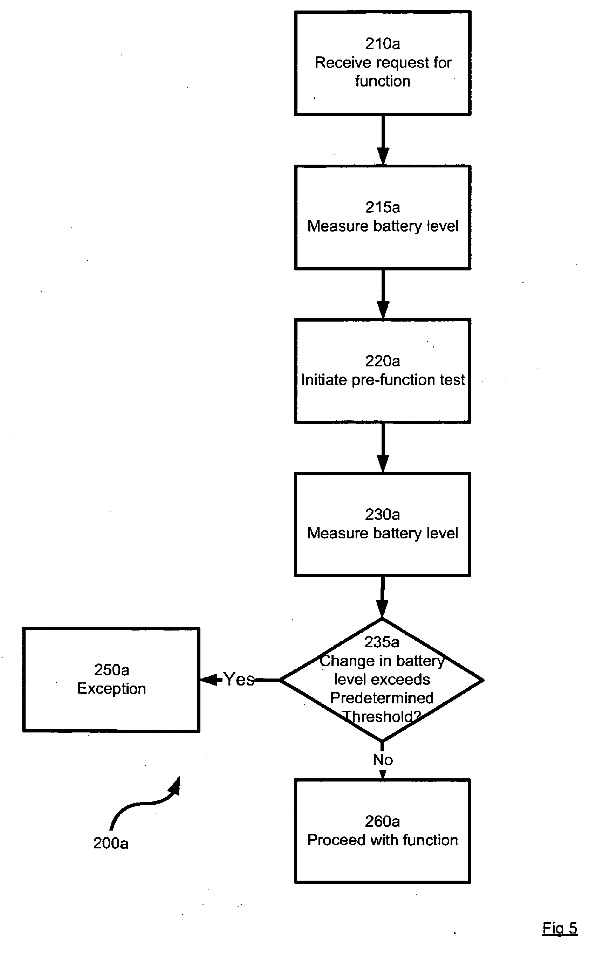

It should be understood that method 200 can be varied. Figure 5 shows an example of such a variation in the form of flow-chart depicting a method 200a Method 200a includes many of the same steps as method 200 and like steps include the same references except followed by the suffix "a". Of note, however, method 200a includes step 215a where the battery level is measured once before the pre-function test at step 220a, and then again after the pre-function test at step 230a. Also of note is that step 240 is replaced by step 235a, where a change in the battery levels as measured at step 215a and step 230a is examined, and based on this change a determination is made as to whether to proceed, or not, with the full camera flash. For example, if it was determined at step 235a that the voltage of battery 66 dropped a predefined amount then step 235a would advance to step 250a and an exception would be generated.

As still further variation, a time-varying voltage (and/or amperage and/or other battery level measurement) profile could be captured during the entire performance of step 220a. In turn, that profile can be compared with known profiles that predict whether a full duration flash would exceed the threshold parameters of supervisor circuit 70.

It should be understood that method 200 and/or method 200a and/or variants thereof can be directly incorporated into supervisor circuit 70.

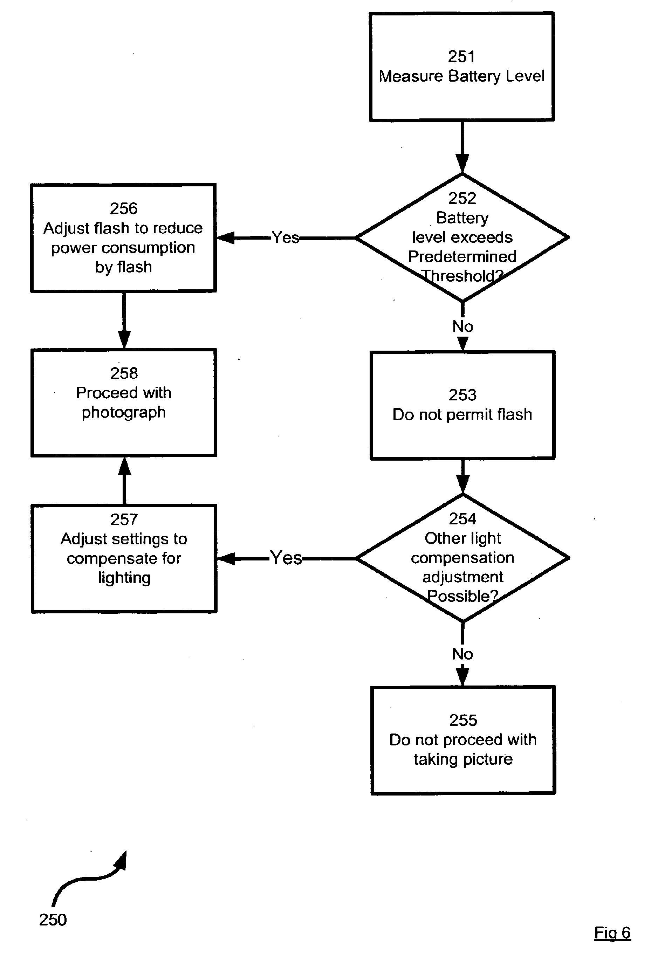

It is to be reiterated that the foregoing embodiments are merely exemplary and variations, combinations and/or subsets of the embodiments discussed herein, and/or other embodiments not expressly discussed herein are contemplated. For example, while the previous embodiments contemplate that the exception at step 250 or step 250a would involve not permitting the flash to proceed, in other embodiments other exceptions could occur. Figure 6 shows an exemplary set of steps that could be used to implement step 250 or step 250a. At step 251 the battery level is measured. At step 252, a determination is made if the battery level exceeds a predetermined threshold. If the response at step 252 is "No", then at step 253 a flash photograph is not permitted. At step 254 a determination is made as to whether other adjustments can be made that will compensate for the poor lighting that lead to the request for the use of the flash in the first place. The determination could be based upon whether decreasing the shutter speed, and/or increasing the aperture size of the lens and/or any other type of adjustment that can compensate for poor lighting conditions. If the response at step 252 is "No", then at step 255 the taking of the photograph is not permitted to proceed. If, however, the response at step 254 is "Yes", then at step 257 settings in the camera (such as shutter speed or aperture) are automatically adjusted to permit the photograph to be taken without a flash. At step 258 the photograph is taken.

Likewise, if the response at step 252 is "Yes", then at step 256 the flash settings are adjusted to reduce power consumption by flash 50 so as to not cause supervisor circuit 70 to shut down device 30. The exact settings for flash 50 at step 256 can be chosen so as to maximize the amount of light output from flash 50 but without tripping supervisor circuit 70.

It should now be understood that, in another variation, step 256 could also be performed in conjunction with step 257, so as to vary the settings of the camera (such as shutter speed and aperture) in conjunction with varying the output from flash 50 to capture a photograph with satisfactory lighting conditions which does not cause such a power drain on battery 66 so as to trip supervisor circuit 70.

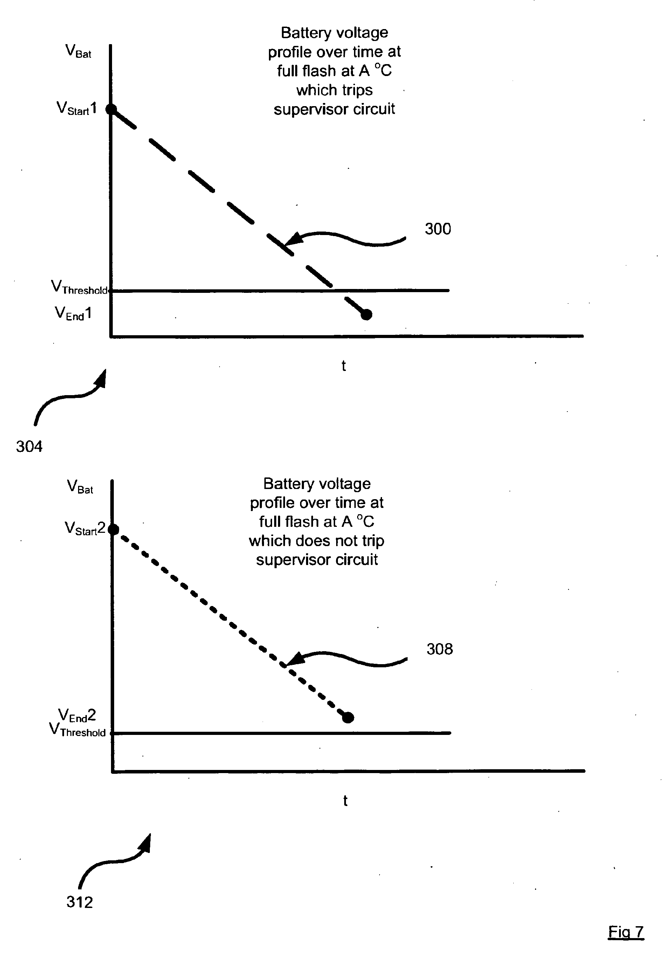

It should now also be understood that the means by which steps 230 and 240 of method 200, and steps 215a, 230a and 235a of method 200a, and variations and combinations of each are not particularly limited. For example, Figure 7 shows two exemplary voltage profiles 300 and 308. Voltage profile 300 is represented in the form of a graph 304, while voltage profile 308 is represented in the form of a graph 312.

Voltage profile 300 represents a profile that will cause supervisor circuit 70 to cause device 30 to enter sleep mode. Voltage profile 300 represents the drop in voltage of battery 66 from V_{Start1} when the ambient temperature is about A °C and flash 50 is used at its full setting, drawing about one ampere of power, over a full time period t of about 80 milliseconds.

In contrast voltage profile 308 represents a profile that will NOT cause supervisor circuit 70 to cause device 30 to enter sleep mode. Voltage profile 308 represents the drop in voltage of battery 66 from V_{Start2} when the ambient temperature is about A °C and flash 50 is used at its full setting, drawing about one ampere of power, over a full time period t of about 80 milliseconds.

Those skilled in the art will now recognize that profiles 300 and 308 are idealized for purposes of explanation, and that in practice such profiles are not necessarily linear.

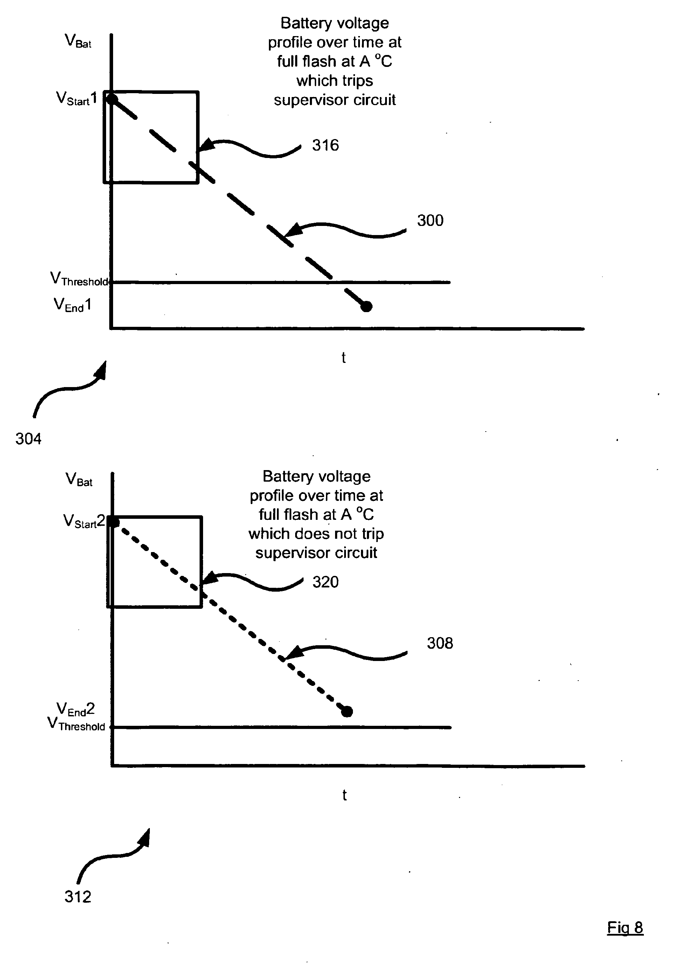

Numerous profiles (or representations thereof), such as profiles 300 and 308, can be gathered for different V_{Start} voltages of battery 66 and different ambient temperatures A °C. An "average" version of profiles (such as profile 300 and 308) can be established by determining profiles for a number of substantially identical copies of device 30, so that variability between devices can be ascertained and considered when establishing profiles. (Such variability can include battery age, battery quality, and/or overall quality of all of the components that comprise device 30, and the manufacturing processes affecting the same. For example, some seemingly identical flash components like flash 50 will consume more power than others.) Referring now to Figure 8, profiles 300 and 308 are reproduced, except that graph 304 includes a pre-function test profile 316, while graph 312 includes a pre-function test profile 320. Pre-function test profiles 316 and 320 are examples of the *actual* effect that step 220 or step 220a can have when performed on device 30. Thus, for example, when method 200 is performed and step 220 results in battery 66 exhibiting profile 316, then at step 240 it would be determined that the battery level is below the predetermined threshold and so method 200 would advance from step 240 to step 250. (At this point use of flash 50 may not be permitted, or the steps in Figure 6 could be performed.) However, when method 200 is performed and step 220 results in battery 66 exhibiting profile 320, then at step 240 it would be determined that the battery level is NOT below a predetermined threshold and so method 200 would advance from step 240 to step 260.

The foregoing represents exemplary embodiments and is not intended to restrict the scope of the claims attached hereto.

## Claims

1. An electronic device (30) comprising:
a power supply;
a supervisor circuit (70) connected to said power supply for disabling all or a portion of functions of said electronic device if a first level of power from said power supply falls below a predefined threshold,
a radio (62), said supervisor circuit (70) configured to disable said radio when said power supply falls below 3.4 Volts for at least five milliseconds;
a processor (54) connected to said power supply and said supervisor circuit; said processor configured to receive a request via an input device for a function to be performed by said electronic device;
an output device (42, 50) connected to said power supply, said processor, and said supervisor circuit, said output device configured to perform a function that draws power from said power supply;
said processor (54) being configured to perform the steps of:
performing a pre-function test; said pre-function test based on said function and selected to consume less power than said function and also selected to not cause the first level of power to fall below said predefined threshold;
determining a second level of power to said device as a consequence of performing said pre-function test; and,
if said second level of power meets at least one predefined criterion, preventing said device from performing said function or otherwise permitting said device to perform said function.

2. The electronic device (30) of claim 1 wherein said output device is a camera flash (50).

3. The electronic device (30) of claim 2 wherein said processor (54) is configured to activate said flash (50) according to said function for a period of about eighty milliseconds and draws current of about one ampere; and wherein said processor (54) is configured to activate said flash according to said pre-function test for a period of about two milliseconds and draws current of about one ampere.

4. The electronic device (30) of any one of claims 1 to 3 wherein, in conjunction with preventing said device from performing said function, said device is configured to generate an output signal indicating that there is insufficient power to perform said function.

5. The electronic device (30) of any one of claims 1 to 4 wherein said device has a rechargeable battery (66) housed within said electronic device for providing power.

6. The electronic device (30) of any one of claims 1 to 5 wherein said processor (54) is configured to measure said first level and said second level of power using one or more of battery voltage, battery amperage, battery equivalent series resistance, and battery temperature.

7. The electronic device (30) of any one of claims 1 to 6 wherein said processor (54) is configured to measure said battery level before and/or after performing said pre-function test and/or throughout the performance of said pre-function test.

8. The electronic device (30) of any one of claims 1 to 7 wherein said processor (54) is configured to measure said battery level once before and once after performing said pre-function test.

9. The electronic device of any one of claims 1 to 8 wherein said processor is configured to capture a time varying profile of one or more parameters indicative of battery level during the performance of the pre-function test.

10. The electronic device (30) of any one of claims 1 to 9 wherein said processor (54) is further configured to, after preventing said electronic device from performing said function, permit said output device (42, 50) to perform an alternative function that consumes less power than said function.

11. The electronic device of claim 10 wherein said function is a camera flash used at full power and said alternative function is said camera flash used at less than full power.

12. The electronic device of claim 11 wherein the alternative function is configured to consume a third level of power that is selected so as not to cause the first level of power to fall below said predefined threshold.

13. The electronic device of claim 1 wherein said supervisor circuit (70) is configured to enter said electronic device into a sleep mode when said power supply falls below 3.1 Volts for at least three milliseconds.

14. The electronic device of any one of claims 1 to 8, wherein said processor is configured to use an average of a plurality of time varying profiles of one or more parameters indicative of battery level during the performance of the pre-function test.

## Patentansprüche

1. Elektronische Vorrichtung (30), die aufweist:
eine Stromversorgung;
ein Überwachungsschaltung (70), die mit der Stromversorgung verbunden ist, zum Deaktivieren aller oder eines Teils von Funktionen der elektronischen Vorrichtung, wenn ein erster Leistungspegel von der Stromversorgung unter einen vordefinierten Schwellenwert fällt,
eine Funkvorrichtung (62), wobei die Überwachungsschaltung (70) konfiguriert ist, die Funkvorrichtung zu deaktivieren, wenn die Stromversorgung für zumindest fünf Millisekunden unter 3,4 Volt fällt;
einen Prozessor (54), der mit der Stromversorgung und der Überwachungsschaltung verbunden ist; wobei der Prozessor konfiguriert ist, über eine Eingabevorrichtung eine Anforderung für eine Durchführung einer Funktion durch die elektronische Vorrichtung zu empfangen;
eine Ausgabevorrichtung (42, 50), die mit der Stromversorgung, dem Prozessor und der Überwachungsschaltung verbunden ist, wobei die Ausgabevorrichtung konfiguriert ist, eine Funktion durchzuführen, die Strom von der Stromversorgung benötigt;
wobei der Prozessor (54) konfiguriert ist, die Schritte durchzuführen:
Durchführen eines Vorfunktionstests; wobei der Vorfunktionstest auf der Funktion basiert und ausgewählt ist, weniger Leistung als die Funktion zu verbrauchen, und weiter ausgewählt ist, damit der erste Leistungspegel nicht unter den vordefinierten Schwellenwert fällt; Bestimmen eines zweiten Leistungspegels der Vorrichtung als eine Folge des Durchführens des Vorfunktionstests; und
wenn der zweite Leistungspegel zumindest ein vordefiniertes Kriterium erfüllt, Verhindern, dass die Vorrichtung die Funktion durchführt, oder ansonsten Ermöglichen, dass die Vorrichtung die Funktion durchführt.

2. Elektronische Vorrichtung (30) gemäß Anspruch 1, wobei die Ausgabevorrichtung ein Blitz (50) einer Kamera ist.

3. Elektronische Vorrichtung (30) gemäß Anspruch 2, wobei der Prozessor (54) konfiguriert ist, den Blitz (50) gemäß der Funktion für eine Zeitdauer von ungefähr achtzig Millisekunden zu aktivieren, und Strom von ungefähr einem Ampere aufnimmt; und wobei der Prozessor (54) konfiguriert ist, den Blitz gemäß dem Vorfunktionstest für eine Zeitdauer von ungefähr zwei Millisekunden zu aktivieren, und Strom von ungefähr einem Ampere aufnimmt.

4. Elektronische Vorrichtung (30) gemäß einem der Ansprüche 1 bis 3, wobei, in Verbindung mit dem Verhindern, dass die Vorrichtung die Funktion durchführt, die Vorrichtung konfiguriert ist, ein Ausgabesignal zu erzeugen, das anzeigt, dass es keine ausreichende Leistung gibt, um die Funktion durchzuführen.

5. Elektronische Vorrichtung (30) gemäß einem der Ansprüche 1 bis 4, wobei die Vorrichtung eine aufladbare Batterie (66) hat, die in der elektronischen Vorrichtung untergebracht ist, zum Liefern von Leistung.

6. Elektronische Vorrichtung (30) gemäß einem der Ansprüche 1 bis 5, wobei der Prozessor (54) konfiguriert ist, den ersten Leistungspegel und den zweiten Leistungspegel zu messen unter Verwendung eines oder mehrerer aus Batteriespannung, Batteriestromstärke, Batterieäquivalenten-Serienwiderstand und Batterietemperatur.

7. Elektronische Vorrichtung (30) gemäß einem der Ansprüche 1 bis 6, wobei der Prozessor (54) konfiguriert ist, den Batteriepegel vor und/oder nach einem Durchführen des Vorfunktionstests und/oder während der Durchführung des Vorfunktionstests zu messen.

8. Elektronische Vorrichtung (30) gemäß einem der Ansprüche 1 bis 7, wobei der Prozessor (54) konfiguriert ist, den Batteriepegel einmal vor und einmal nach einem Durchführen des Vorfunktionstests zu messen.

9. Elektronische Vorrichtung gemäß einem der Ansprüche 1 bis 8, wobei der Prozessor konfiguriert ist, ein zeitlich variierendes Profil von einem oder mehreren Parametern zu erfassen, die einen Batteriepegel anzeigen, während der Durchführung des Vorfunktionstests.

10. Elektronische Vorrichtung (30) gemäß einem der Ansprüche 1 bis 9, wobei der Prozessor (54) weiter konfiguriert ist, nach dem Verhindern, dass die elektronische Vorrichtung die Funktion durchführt, der Ausgabevorrichtung (42, 50) zu ermöglichen, eine alternative Funktion durchzuführen, die weniger Leistung als die Funktion verbraucht.

11. Elektronische Vorrichtung gemäß Anspruch 10, wobei die Funktion ein Kamerablitz ist, der mit voller Leistung verwendet wird, und die alternative Funktion der Kamerablitz ist, der bei weniger als der vollen Leistung verwendet wird.

12. Elektronische Vorrichtung gemäß Anspruch 11, wobei die alternative Funktion konfiguriert ist, einen dritten Leistungspegel zu verbrauchen, der gewählt ist derart, dass der erste Leistungspegel nicht unter den vordefinierten Schwellenwert fällt.

13. Elektronische Vorrichtung gemäß Anspruch 1, wobei die Überwachungsschaltung (70) konfiguriert ist, die elektronische Vorrichtung in einen Schlafmodus zu bringen, wenn die Stromversorgung für zumindest drei Millisekunden unter 3,1 Volt fällt.

14. Elektronische Vorrichtung gemäß einem der Ansprüche 1 bis 8, wobei der Prozessor konfiguriert ist, einen Durchschnitt einer Vielzahl von zeitlich variierenden Profilen von einem oder mehreren Parametern zu verwenden, die einen Batteriepegel anzeigen, während der Durchführung des Vorfunktionstests.

## Revendications

1. Dispositif électronique (30), comprenant:
une alimentation;
un circuit de superviseur (70) connecté à ladite alimentation afin de désactiver tout ou partie de fonctions dudit dispositif électronique si un premier niveau de puissance de ladite alimentation chute en dessous d'un seuil prédéfini;
une radio (62), ledit circuit de superviseur (70) étant configuré de façon à désactiver ladite radio lorsque ladite alimentation chute en dessous de 3,4 volts pendant au moins cinq millisecondes;
un processeur (54) connecté à ladite alimentation et audit circuit de superviseur; ledit processeur étant configuré de façon à recevoir une demande par l'intermédiaire d'un dispositif d'entrée, concernant une fonction devant être exécutée par ledit dispositif électronique;
un dispositif de sortie (42, 50) connecté à ladite alimentation, audit processeur et audit circuit de superviseur, ledit dispositif de sortie étant configuré de façon à exécuter une fonction qui consomme de l'énergie à partir de ladite alimentation ;
ledit processeur (54) étant configuré de façon à effectuer les étapes consistant à:
exécuter un test pré-fonction; ledit test de pré-fonction étant fonction de ladite fonction et sélectionné de façon à consommer moins d'énergie que ladite fonction, et étant également sélectionné de façon à ne pas faire chuter le premier niveau de puissance en dessous dudit seuil prédéfini;
déterminer un deuxième niveau de puissance pour ledit dispositif en conséquence de l'exécution dudit test pré-fonction; et
si ledit deuxième niveau de puissance satisfait à au moins un critère prédéfini, empêcher ledit dispositif d'exécuter ladite fonction, ou, sinon, permettre audit dispositif d'exécuter ladite fonction.

2. Dispositif électronique (30) selon la revendication 1, dans lequel ledit dispositif de sortie est un flash d'appareil photographique (50).

3. Dispositif électronique (30) selon la revendication 2, dans lequel ledit processeur (54) est configuré de façon à actionner ledit flash (50) selon ladite fonction pendant une période d'environ quatre-vingts millisecondes et consomme un courant d'environ un ampère ; et dans lequel ledit processeur (54) est configuré de façon à actionner ledit flash selon ledit test de pré-fonction pendant une période d'environ deux millisecondes et consomme un courant d'environ un ampère.

4. Dispositif électronique (30) selon l'une quelconque des revendications 1 à 3, dans lequel, en association avec l'inhibition de l'exécution de ladite fonction par ledit dispositif, ledit dispositif est configuré de façon à générer un signal de sortie indiquant qu'il y a une énergie insuffisante pour exécuter ladite fonction.

5. Dispositif électronique (30) selon l'une quelconque des revendications 1 à 4, dans lequel ledit dispositif comporte une batterie rechargeable (66) logée à l'intérieur dudit dispositif pour délivrer de l'énergie.

6. Dispositif électronique (30) selon l'une quelconque des revendications 1 à 5, dans lequel ledit processeur (54) est configuré de façon à mesurer ledit premier niveau et ledit deuxième niveau de puissance à l'aide de l'une ou de plusieurs parmi une tension de batterie, une intensité de batterie, une résistance série équivalente de batterie, et une température de batterie.

7. Dispositif électronique (30) selon l'une quelconque des revendications 1 à 6, dans lequel ledit processeur (54) est configuré de façon à mesurer ledit niveau de batterie avant et/ou après l'exécution dudit test de pré-fonction et/ou tout au long de l'exécution dudit test de pré-fonction.

8. Dispositif électronique (30) selon l'une quelconque des revendications 1 à 7, dans lequel ledit processeur (54) est configuré de façon à mesurer ledit niveau de batterie une fois avant et une fois après l'exécution dudit test de pré-fonction.

9. Dispositif électronique selon l'une quelconque des revendications 1 à 8, dans lequel ledit processeur est configuré de façon à capturer un profil variant dans le temps d'un ou de plusieurs paramètres indicatifs d'un niveau de batterie durant l'exécution du test de pré-fonction.

10. Dispositif électronique (30) selon l'une quelconque des revendications 1 à 9, dans lequel ledit processeur (54) est de plus configuré de façon, après l'inhibition de l'exécution de ladite fonction par ledit dispositif électronique, à permettre audit dispositif de sortie (42, 50) d'exécuter une autre fonction qui consomme moins d'énergie que ladite fonction.

11. Dispositif électronique selon la revendication 10, dans lequel ladite fonction est un flash d'appareil photographique utilisé à pleine puissance et ladite autre fonction est ledit flash d'appareil photographique utilisé à une puissance inférieure à la pleine puissance.

12. Dispositif électronique selon la revendication 11, dans lequel l'autre fonction est configurée de façon à consommer un tiers du niveau de puissance qui est sélectionné, de façon à ne pas faire chuter le premier niveau de puissance en dessous dudit seuil prédéfini.

13. Dispositif électronique selon la revendication 1, dans lequel ledit circuit de superviseur (70) est configuré de façon à faire entrer ledit dispositif électronique dans un mode de veille lorsque ladite alimentation chute en dessous de 3,1 volts pendant au moins trois millisecondes.

14. Dispositif électronique selon l'une quelconque des revendications 1 à 8, dans lequel ledit processeur est configuré de façon à utiliser une moyenne d'une pluralité de profils variant dans le temps d'un ou de plusieurs paramètres indicatifs d'un niveau de batterie durant l'exécution du test de pré-fonction.
